# EUROPÄISCHE PATENTSCHRIFT

(11) **EP 4 386 216 B1**
(45) Veröffentlichungstag und Bekanntmachung des Hinweises auf die Patenterteilung: **18.03.2026**
(21) Anmeldenummer: 23215154.8
(22) Anmeldetag: 08.12.2023
(51) Int. Cl.: F16B 5/02, F16B 5/06, F16B 21/09, E04C 2/38

(54) **BLECHVERBINDUNG**
SHEET METAL CONNECTION
ASSEMBLAGE DE TÔLES

(30) Priorität: 12.12.2022 DE 102022132980
(43) Veröffentlichungstag der Anmeldung: 19.06.2024
(73) Patentinhaber: Protektorwerk Florenz Maisch GmbH & Co. KG, 76571 Gaggenau (DE)
(72) Erfinder: HARTMANN, Matthias, 76456 Kuppenheim (DE); WILLERSCHEID, Heiner, 77886 Lauf (DE)
(74) Vertreter: Manitz Finsterwald Patent- und Rechtsanwaltspartnerschaft mbB

(56) Entgegenhaltungen:
- US-A- 1 983 020
- US-A- 3 894 377
- US-A1- 2013 134 763

## Beschreibung

Die Erfindung betrifft eine Blechverbindung zur Verbindung zweier Blechteile. Die Blechteile sollen dabei insbesondere mit einer jeweiligen Anlagefläche bündig aneinander anliegend verbunden werden. Eine Blechverbindung nach dem Oberbegriff des Anspruchs 1 ist beispielsweise aus US 3,894,377 A bekannt.

Es gibt viele verschiedene Arten, auf welche zwei Blechteile miteinander verbunden werden können. Beispielsweise können zwei Blechteile mit einander verschraubt oder vermietet werden. Oftmals ist dabei für das Verbinden ein Zugang zu zumindest einem der Blechteile von der von dem jeweiligen anderen Blechteil abgewandten Seite aus erforderlich. Je nachdem, wie das Blechteil ausgebildet ist oder in welcher größeren Anordnung es eingebaut ist, ist ein solcher Zugang jedoch nicht ohne Weiteres möglich.

Beispielsweise kann es sich bei dem Blechteil um ein Profil eines Wand- oder Deckenelements für den Trocken- oder Stahlleichtbau handeln. Ein solches Wand- oder Deckenelement kann etwa durch eine Anordnung mehrerer miteinander verbundener Profile gebildet werden, an der beidseitig ein oder mehrere Wandfelder befestigt sind, so dass die Profile mit den Wandfeldern beplankt sind. Zu den Wandfeldern senkrecht ausgerichtete Stirnseiten des jeweiligen Wand- oder Deckenelements können dabei jeweils durch einen Abschnitt eines sich entlang eines jeweiligen Randes des Wand- oder Deckenelements erstreckenden Abschlussprofils gebildet werden.

Um zwei derartige Wand- oder Deckenelemente auf Stoß miteinander zu verbinden, werden sie so angeordnet, dass eine Stirnseite des einen der beiden Wand- oder Deckenelemente und eine Stirnseite des anderen Wand- oder Deckenelements bündig aneinander anliegen. Dadurch liegt dann eine nach außen weisende Anlagefläche des jeweiligen Profils des einen Wand- oder Deckenelements an einer nach außen weisenden Anlagefläche des jeweiligen Profils des anderen Wand- oder Deckenelements an. Die den Anlageflächen entgegengesetzten Innenseiten des jeweiligen Profils sind dann jedoch aufgrund der Beplankung nicht oder nur schlecht zugänglich. Aus diesem Grund ist es im Trocken- und Stahlleichtbau in der Regel so, dass, um vorgefertigte Wand- oder Deckenelemente miteinander zu verbinden, auf zumindest einer Seite des jeweiligen Wand- oder Deckenelements in Bereichen nahe der jeweiligen Stirnseite die Beplankung offenbleiben muss, um die stirnseitigen Profile miteinander verschrauben zu können. Das hat den Nachteil, dass vorgefertigte Wand- und Deckenelemente nicht bereits im Herstellerwerk vollflächig beplankt werden können.

Darüber hinaus muss auf der Baustelle beim Verbinden zweier Wand- oder Deckenelemente deren korrekte, bündige Anordnung relativ zueinander sichergestellt werden. Gängige Arten der Verbindung, wie etwa Schraub- und Nietverbindungen, bieten hierfür keine Hilfestellung. Vielmehr sind die beiden Wand- oder Deckenelemente relativ zueinander frei positionierbar und müssen zunächst präzise zueinander ausgerichtet werden, bevor ihre Anordnung relativ zueinander durch das Verbinden der beiden Wand- oder Deckenelemente festgelegt wird. Das erfordert in der Regel einen erhöhten personellen Einsatz und Arbeitsaufwand auf der Baustelle.

Es ist eine Aufgabe der Erfindung, eine Blechverbindung bereitzustellen, durch die zwei Blechteile flächig miteinander verbunden werden können, ohne dass hierzu ein Zugang zur von dem jeweils anderen Blechteil abgewandten Seite des jeweiligen Blechteils erforderlich ist, und die eine korrekte Anordnung der beiden Blechteile relativ zueinander, vorzugsweise in alle drei Raumrichtungen, unterstützt.

Die Aufgabe wird gelöst durch eine Blechverbindung mit den Merkmalen des Anspruchs 1. Vorteilhafte Ausführungsformen der Erfindung ergeben sich aus den Unteransprüchen, der vorliegenden Beschreibung sowie den Figuren.

Die erfindungsgemäße Blechverbindung umfasst eine Aufnahmeöffnung, die in einer ebenen Anlagefläche eines ersten Blechteils ausgebildet ist, und einen Verbindungsbolzen, der sich entlang einer Bolzenachse erstreckt und dazu ausgebildet ist, mit einem Befestigungsabschnitt an einer ebenen Anlagefläche eines zweiten Blechteils derart angebracht zu werden, dass der Verbindungsbolzen mit einem Verbindungsabschnitt orthogonal von der Anlagefläche des zweiten Blechteils vorsteht.

Die Aufnahmeöffnung erstreckt sich orthogonal zur Anlagefläche vorzugsweise vollständig durch das erste Blechteil hindurch. Die insofern als Durchgangsöffnung ausgebildete Aufnahmeöffnung kann daher auch als Aufnahmeloch betrachtet und bezeichnet werden. Die Aufnahmeöffnung kann in dem ersten Blechteil beispielsweise durch Stanzen ausgebildet sein. Das ermöglicht eine einfache Herstellung der Aufnahmeöffnung.

Der Verbindungsbolzen ist vorzugweise länglich, stiftförmig ausgebildet. Insbesondere kann der Verbindungsbolzen zumindest im Wesentlichen (zum Beispiel von einem gegebenenfalls vorhandenen Gewinde abgesehen) rotationssymmetrisch bezüglich seiner Bolzenachse ausgebildet sein. Zur Anbringung an der Anlagefläche des zweiten Blechteils kann der Verbindungsbolzen beispielsweise nach Art einer Schraube ausgebildet sein. Insofern kann der Verbindungsbolzen einen Gewindeabschnitt aufweisen, mit dem er in die Anlagefläche des zweiten Blechteils eingeschraubt werden kann. Der Gewindeabschnitt kann selbstbohrend ausgebildet sein, so dass sich der Verbindungsbolzen unmittelbar in die Anlagefläche des zweiten Blechteils einschrauben lässt. Das ist aber nicht zwingend der Fall, da es zum Beispiel auch denkbar ist, dass eine Gewindehülse an der Anlagefläche des zweiten Blechteils angebracht, beispielsweise darin eingepresst, wird, in die der Gewindeabschnitt des Verbindungsbolzens dann eingeschraubt werden kann. Außerdem kann der Verbindungsbolzen einen Kopfabschnitt mit einer Antriebsstruktur für das Angreifen eines Werkzeugs aufweisen, so dass mittels des Werkszeugs auf einfache Weise die für das Einschrauben erforderliche Kraft auf den Verbindungsbolzen übertragen werden kann. Grundsätzlich kann der Verbindungsbolzen aber auch auf andere Weise speziell im Hinblick auf eine zuverlässige Anbringung an einem Blechteil, z. B. für ein Vernieten, ausgebildet sein.

Dabei ist der Verbindungsbolzen dazu ausgebildet, dass nach der Anbringung an der Anlagefläche des zweiten Blechteils ein Teil des Verbindungsbolzens von der Anlagefläche des zweiten Blechteils orthogonal vorsteht, so dass also die Bolzenachse orthogonal zur Anlagefläche des zweiten Blechteils ausgerichtet ist. Der vorstehende Teil des Verbindungsbolzens umfasst oder bildet den genannten Verbindungsabschnitt, der durch das Vorstehen von der Anlagefläche für die Verbindung mit dem ersten Blechteil zur Verfügung steht. Der Verbindungsabschnitt kann den genannten Kopfabschnitt sowie gegebenenfalls auch einen Teil des genannten Gewindeabschnitts umfassen. Der übrige Teil des Verbindungsbolzens, der den genannten Befestigungsabschnitt bilden kann, kann sich orthogonal zur Anlagefläche durch das zweite Blechteil hindurch erstrecken und dadurch entgegengesetzt zum Verbindungsabschnitt von der zur Anlagefläche entgegengesetzten Seite des zweiten Blechteils vorstehen. Sofern der Verbindungsbolzen nicht durch Einschrauben, sondern durch Vernieten an dem zweiten Blechteil angebracht wird, kann dieser übrige Teil des Verbindungsbolzens auf der zur Anlagefläche entgegengesetzten Seite des zweiten Blechteils auch vernietet sein.

Das erste Blechteil weist vorzugsweise eine konstante Stärke (Dicke) auf. Das erste Blechteil kann zu einem Profil umgebogen sein, das beispielsweise einen C- oder U-förmigen Querschnitt aufweist. Insbesondere kann das erste Blechteil als ein C- oder U-Profil für Wand- oder Deckenelemente für den Trocken- oder Stahlleichtbau ausgebildet sein. Die genannte Anlagefläche des ersten Blechteils kann dabei durch die Oberfläche eines flächigen, ebenen Abschnitts des Blechteils gebildet werden. Dieser Abschnitt kann insbesondere einem mittleren Abschnitt des genannten C- oder U-förmigen Querschnitts entsprechen. Die Anlagefläche weist dabei vorzugsweise nach außen, d. h. weg von einem durch die C- oder U-Form definierten Innenbereich des Profils. Gemäß einer vorteilhaften Ausführungsform ist das erste Blechteil als Abschlussprofil eines Wand- oder Deckenelements für den Trocken- oder Stahlleichtbau ausgebildet, wobei das Abschlussprofil eine C-Form oder U-Form mit einem Mittelabschnitt und zwei Randabschnitten aufweist, die orthogonal zu dem Mittelabschnitt ausgerichtet sind, wobei die Randabschnitte jeweils mit einem Wandfeld beplankt sind, und wobei der Mittelabschnitt die Anlagefläche mit der Aufnahmeöffnung aufweist.

Auch das zweite Blechteil kann auf die vorstehend beschriebene Weise ausgebildet sein. Allerdings müssen das erste Blechteil und das zweite Blechteil nicht zwingend auf dieselbe Weise ausgebildet sein, also z. B. nicht unbedingt dieselbe Stärke oder denselben Querschnitt aufweisen.

Die Blechverbindung kann auch mehrere Aufnahmeöffnungen und mehrere Verbindungsbolzen der genannten Art umfassen. Dabei können die Aufnahmeöffnungen jeweils in der Anlagefläche des ersten Blechteils ausgebildet sein, wobei die Verbindungsbolzen dann an der Anlagefläche des zweiten Blechteils angebracht werden. Es kann aber auch vorgesehen sein, dass einige der Aufnahmeöffnungen in der Anlagefläche des ersten Blechteils und die übrigen Aufnahmeöffnungen in der Anlagefläche des zweiten Blechteils ausgebildet sind und die Verbindungsbolzen dementsprechend teilweise an der Anlagefläche des ersten Blechteils und teilweise an der Anlagefläche des zweiten Teils angebracht werden.

Die Bezeichnung der Blechteile als erstes Blechteil und zweites Blechteil dient lediglich der begrifflichen Unterscheidung der beiden miteinander zu verbindenden bzw. verbundenen Blechteile. Insbesondere implizieren diese Bezeichnungen keine Rangordnung oder eine Gesamtzahl von Blechteilen. Insofern können an der Verbindung grundsätzlich auch mehr als nur das erste und das zweite Blechteil beteiligt sein. Das erste Blechteil und das zweite Blechteil können zumindest im Wesentlichen, gegebenenfalls abgesehen von den Aufnahmeöffnungen, gleichartig, insbesondere baugleich, zueinander ausgebildet sein.

Für die Blechverbindung kann es ausreichen, das erste Blechteil mit einer oder mehreren in der Anlagefläche des ersten Blechteils ausgebildeten Aufnahmeöffnungen sowie eine entsprechende Anzahl von Verbindungsbolzen zur Anbringung an einem zweiten Blechteil bereitzustellen, so dass die Blechverbindung nicht auf ein bestimmtes zweites Blechteil festgelegt ist, sondern mit verschiedenen zweiten Blechteilen verwendet werden kann. Die Blechverbindung kann das zweite Blechteil aber auch umfassen. In diesem Fall ist der Verbindungsbolzen dann nicht nur zur Anbringung an dem zweiten Blechteil ausgebildet, sondern (bereits) an der Anlagefläche des zweiten Blechteils derart angebracht, dass er mit dem Verbindungsabschnitt orthogonal von der Anlagefläche des zweiten Blechteils vorsteht.

Erfindungsgemäß umfasst der Verbindungsabschnitt des Verbindungsbolzens einen Einschnürungsabschnitt und einen Schulterabschnitt, der entlang der Bolzenachse in von dem Befestigungsabschnitt weg weisender Richtung an den Einschnürungsabschnitt angrenzt und einen größeren Durchmesser als der Einschnürungsabschnitt aufweist. Vorzugsweise weist der Schulterabschnitt von allen Abschnitten des Verbindungsbolzens oder zumindest allen Abschnitten des Verbindungsabschnitts des Verbindungsbolzens den insgesamt größten Durchmesser auf.

Bei dem Einschnürungsabschnitt und dem Schulterabschnitt kann es sich insbesondere um bezüglich der Bolzenachse axiale Abschnitte des Verbindungsbolzens handeln, die sich hinsichtlich ihres Durchmessers unterscheiden. Dabei weisen der Einschnürungsabschnitt und der Schulterabschnitt jeweils vorzugsweise einen kreisrunden Querschnitt senkrecht zur Bolzenachse auf. Sofern der Querschnitt nicht kreisrund ist und der Durchmesser des jeweiligen Abschnitts somit nicht in alle Richtungen senkrecht zur Bolzenachse gleich ist, beziehen sich die verglichenen Durchmesser jeweils auf den größten Durchmesser des jeweiligen Abschnitts; insbesondere ist dann also der größte Durchmesser des Schulterabschnitt größer als der größte Durchmesser des Einschnürungsabschnitts.

Dass der Schulterabschnitt an den Einschnürungsabschnitt axial angrenzt und einen größeren Durchmesser als der Einschnürungsabschnitt aufweist, ermöglicht ein axiales Hintergreifen des Schulterabschnitts auf Höhe des Einschnürungsabschnitts. Insbesondere können auf diese Weise ein oder mehrere Ränder der Aufnahmeöffnung radial in den Einschnürungsabschnitt eingreifen und den Schulterabschnitt dadurch axial hintergreifen, so dass das erste Blechteil bezüglich der Bolzenachse formschlüssig mit dem Verbindungsbolzen (und darüber mit dem zweiten Blechteil, an dem der Verbindungsbolzen angebracht ist) verbunden werden kann.

Der Verbindungsbolzen kann dazu ausgebildet sein, derart an dem zweiten Blechteil angebracht zu werden, dass der Einschnürungsabschnitt entlang der Bolzenachse an der Anlagefläche des zweiten Blechteils anliegt, also unmittelbar an der Anlagefläche angrenzt und sich von dieser aus entlang der Bolzenachse bis zum Schulterabschnitt erstreckt. Der Einschnürungsabschnitt wird dann entlang der Bolzenachse einerseits von dem Schulterabschnitt und einerseits von der Anlagefläche des zweiten Blechteils flankiert.

Der Verbindungsabschnitt kann dabei eine Hülse umfassen, die an dem Verbindungsbolzen vorgesehen ist, oder auch durch eine solche Hülse gebildet werden. Die Hülse kann im Wesentlichen hohlzylindrisch ausgebildet sein. Dabei kann die Hülse an einem Ende ihrer axialen Erstreckung eine Durchmessererweiterung nach Art eines Flansches aufweisen, die den genannten Schulterabschnitt bildet, während der übrige Teil der Hülse den Einschnürungsabschnitt bildet. Der Verbindungsbolzen kann sich mit einem Schaftabschnitt, der dem genannten Gewindeabschnitt entsprechen kann, durch die Hülse hindurch erstrecken. Umgekehrt kann sich die Hülse bezüglich der Bolzenachse in Umlaufrichtung um den Schaftabschnitt des Verbindungsbolzens herum erstrecken. Der Verbindungsbolzen kann einen (insbesondere den genannten) Kopfabschnitt aufweisen, der einen im Vergleich zu dem Schaftabschnitt größeren Durchmesser aufweist. Beim Anbringen des Verbindungsbolzens an der Anlagefläche des zweiten Blechteils kann die Hülse zwischen dem Kopfabschnitt des Verbindungsbolzens und der Anlagefläche des zweiten Blechteils axial gefangen oder sogar eingespannt werden. Insofern kann die Hülse auch als Abstandshalter fungieren, durch den festgelegt wird, wie tief der Verbindungsbolzen beim Anbringen an der Anlagefläche des zweiten Blechteils in das zweite Blechteil eindringen kann. Insbesondere kann durch eine solche Hülse auf einfache Weise der Abstand des Schulterabschnitts entlang der Bolzenachse von der Anlagefläche des zweiten Blechteils festgelegt werden.

Des Weiteren ist erfindungsgemäß vorgesehen, dass sich die Aufnahmeöffnung entlang einer zur Anlagefläche des ersten Blechteils parallelen Längsrichtung von einem Einsteckabschnitt zu einem Verriegelungsabschnitt erstreckt, wobei der Einsteckabschnitt quer zur Längsrichtung, d. h. bezüglich einer zur Anlagefläche des ersten Blechteils parallelen und zur Längsrichtung orthogonalen Querrichtung, eine Breite aufweist, die größer als der Durchmesser des genannten Schulterabschnitts ist, und der Verriegelungsabschnitt quer zur Längsrichtung eine Breite aufweist, die kleiner als der Durchmesser des genannten Schulterabschnitts ist und vorzugsweise zumindest im Wesentlichen dem Durchmesser des genannten Einschnürungsabschnitts entspricht.

Dadurch, dass der Einsteckabschnitt der Aufnahmeöffnung eine Breite aufweist die größer als der Durchmesser des Schulterabschnitts des Verbindungsbolzens ist, kann der Verbindungsabschnitt des Verbindungsbolzens in einer zur Anlagefläche des ersten Blechteils orthogonalen Einsteckrichtung in den Einsteckabschnitt der Aufnahmeöffnung eingesteckt werden. Wenn der Verbindungsbolzen anschließend innerhalb der Aufnahmeöffnung entlang der Längsrichtung von dem Einsteckabschnitt zu dem Verriegelungsabschnitt versetzt wird, hintergreift der Schulterabschnitt des Verbindungsbolzens aufgrund der geringeren Breite des Verriegelungsabschnitts die Aufnahmeöffnung bezüglich der Einsteckrichtung, so dass er die Aufnahmeöffnung parallel zur Einsteckrichtung nicht mehr verlassen kann. Die erfindungsgemäße Ausbildung der Aufnahmeöffnung und des Verbindungsbolzens bewirkt dadurch eine zuverlässige formschlüssige Verbindung des ersten Blechteils mit dem zweiten Blechteil.

Gemäß einer vorteilhaften Ausführungsform ist die Breite des Verriegelungsabschnitts der Aufnahmeöffnung nach Art einer Übermaßpassung kleiner als der Durchmesser des genannten Einschnürungsabschnitts des Verbindungsbolzens. Der Durchmesser des Einschnürungsabschnitt des Verbindungsbolzens ist also geringfügig größer als die Breite des Verriegelungsabschnitts der Aufnahmeöffnung, jedoch nur so viel, dass der Verbindungsbolzen dennoch von dem Einsteckabschnitt entlang der Längsrichtung in den Verriegelungsabschnitt versetzt werden kann, wobei dazu aufgrund der Übermaßpassung ein gewisser Druck erforderlich ist. Vorteilhafterweise ist der Einschnürungsabschnitt des Verbindungsbolzens dann in dem Verriegelungsabschnitt der Aufnahmeöffnung eingeklemmt, so dass er kraftschlüssig daran gehindert wird, den Verriegelungsabschnitt entgegen der Längsrichtung, also in Richtung zurück zum Einsteckabschnitt, zu verlassen. Darüber hinaus ergibt sich der weitere Vorteil, dass der Verbindungsbolzen durch das Einklemmen auch bezüglich seiner Position quer zur Längsrichtung besonders präzise festgelegt wird. Somit braucht beim Verbinden der beiden Blechteile nicht mehr auf ihre relative Anordnung quer zur Längsrichtung geachtet zu werden, da sie in diese Raumrichtung automatisch korrekt relativ zueinander angeordnet werden.

Erfindungsgemäß weist die Aufnahmeöffnung zwischen dem Einsteckabschnitt und dem Verriegelungsabschnitt einen Zwischenabschnitt auf, der quer zur Längsrichtung, d. h. bezüglich einer zur Anlagefläche des ersten Blechteils parallelen und zur Längsrichtung orthogonalen Querrichtung, durch zwei zueinander entgegengesetzte Ränder begrenzt wird, deren Abstand voneinander in Richtung zum Verriegelungsabschnitt, vorzugsweise monoton, insbesondere streng monoton, abnimmt. Vorzugsweise weisen die Ränder dabei jeweils einen geraden Verlauf auf. Die Ränder können sich jeweils an ihrem einen Ende bis in den Einsteckabschnitt und/oder an ihrem anderen Ende bis in den Verriegelungsabschnitt hinein erstrecken. Durch den abnehmenden Abstand nimmt die Breite der Aufnahmeöffnung vom Einsteckabschnitt zum Verriegelungsabschnitt kontinuierlich ab. Dadurch wird der in den Einsteckabschnitt eingesetzte Verriegelungsbolzen beim Versetzen entlang der Längsrichtung in den Verriegelungsabschnitt quer zur Längsrichtung in eine mittlere Position gebracht, in der er spätestens mit Erreichen des Verriegelungsabschnitts vorzugsweise festgelegt wird.

Des Weiteren ist erfindungsgemäß an jedem der zwei genannten Ränder jeweils eine Lasche ausgebildet, die entlang des jeweiligen Randes gegenüber der Anlagefläche des ersten Blechteils umgebogen ist, so dass sie entgegen der Richtung, in welche die Anlagefläche des ersten Blechteils weist, von dem jeweiligen Rand vorsteht. Der jeweilige Rand stellt insofern die Biegekante für das Umbiegen der jeweiligen Lasche da. Durch das Umbiegen steht die Lasche an der der Anlagefläche entgegengesetzten Seite des Blechteils von dem Rand vor. Wenn das Blechteil als C- oder U-Profil ausgebildet ist, weist die Anlagefläche vorzugsweise nach außen, d. h. von einem durch die C- oder U-Form des Profilquerschnitts zumindest weitgehend umgebenen Innenbereich weg. Die Lasche ist dann nach innen, d. h. in den genannten Innenbereich hinein, umgebogen.

Wenn hier sowie im Folgenden mögliche Merkmale und Eigenschaften der Lasche (in der Einzahl) beschrieben werden, ist damit eine jeweilige der beiden Laschen gemeint. Insbesondere kann also jede der beiden Laschen auf die jeweilige beschriebene Weise ausgebildet sein.

Wenn der Verbindungsbolzen mit seinem Verbindungsabschnitt in den Einsteckabschnitt der Aufnahmeöffnung eingesteckt wird und anschließend in den Verriegelungsabschnitt der Aufnahmeöffnung versetzt wird, kann an den beiden genannten Rändern die jeweilige Lasche in den Einschnürungsabschnitt des Verbindungsabschnitts seitlich eingreifen und den Schulterabschnitt des Verbindungsabschnitts dadurch hintergreifen. Aufgrund der bezüglich der Bolzenachse (bzw. bezüglich der genannten, zur Anlagefläche des ersten Blechteils orthogonalen Einsteckrichtung) axialen Erstreckung der Laschen sind die Ränder der Aufnahmeöffnung durch die Laschen verstärkt, was zu einem zuverlässigen Formschluss zwischen dem Verbindungsbolzen und der Aufnahmeöffnung beiträgt.

Die Lasche muss nicht unbedingt orthogonal zur Anlagefläche ausgerichtet sein. Gemäß einer vorteilhaften Ausführungsform ist die Lasche entlang des jeweiligen Randes aus einer mit der Anlagefläche des ersten Blechteils planen Ausrichtung um einen Winkel umgebogen, der größer als 45° ist, vorzugsweise zwischen 60° und 80°, weiter bevorzugt zwischen 65° und 75°, insbesondere zumindest im Wesentlichen 70°, beträgt. Mit der der Anlagefläche entgegengesetzten Seite des ersten Blechteils schließt die Lasche also vorzugsweise einen stumpfen Winkel ein.

Da der genannte Winkel, um den die Lasche aus einer mit der Anlagefläche des ersten Blechteils planen Ausrichtung umgebogen ist, größer als 45° ist, erstreckt sich die Lasche stärker in zu der Anlagefläche orthogonaler Richtung als in zu der Anlagefläche paralleler Richtung. Eine dem jeweiligen Rand, an dem die Lasche ausgebildet ist, entgegengesetzte Stirnseite der Lasche weist dadurch stärker in eine bezüglich der Bolzenachse (bzw. bezüglich der genannten, zur Anlagefläche des ersten Blechteils orthogonalen Einsteckrichtung) axiale Richtung als in eine radiale Richtung, so dass sich die Lasche, insbesondere nachdem der in die Aufnahmeöffnung eingesteckte Verbindungsabschnitt des Verbindungsbolzens in den Verriegelungsabschnitt der Aufnahmeöffnung versetzt wurde, an dem Schulterabschnitt des Verbindungsabschnitts des Verbindungsbolzens axial abstützen kann. Das trägt zu einem zuverlässigen Hintergreifen und insgesamt zu einer zuverlässigen Festlegung des Verbindungsbolzens in der Aufnahmeöffnung bei.

Des Weiteren kann gemäß einer vorteilhaften Ausführungsform die Lasche eine Erstreckung orthogonal zur Anlagefläche des ersten Blechteils aufweisen, die zumindest entlang eines Rampenabschnitts des Zwischenabschnitts mit zunehmendem Abstand vom Einsteckabschnitt zunimmt. Vorzugsweise nimmt die genannte Erstreckung dabei linear zu, ist also zum Abstand vom Einsteckabschnitt proportional. Durch eine solche lineare Zunahme weist der Verlauf der dem jeweiligen Rand, an dem die Lasche ausgebildet ist, entgegengesetzten Stirnseite der Lasche innerhalb des Rampenabschnitts einen von 0° verschiedenen, konstanten Winkel zum jeweiligen Rand auf, der vorzugsweise zwischen 5° und 10°, insbesondere zumindest im Wesentlichen 8°, beträgt.

Grundsätzlich kann die Erstreckung der Lasche orthogonal zur Anlagefläche des ersten Blechteils entlang der gesamten Länge der Lasche entlang der Längsrichtung kontinuierlich zu nehmen. Die Zunahme der Erstreckung kann aber auch auf den genannten Rampenabschnitt beschränkt sein. Vorzugsweise erstreckt sich der Rampenabschnitt über zumindest ein Drittel, insbesondere nicht mehr als zwei Drittel, der Länge der Lasche entlang der Längsrichtung und/oder umfasst ein einsteckabschnittsseitiges Ende des Zwischenabschnitts.

Durch die zunehmende Erstreckung der Lasche orthogonal zur Anlagefläche des ersten Blechteils kann die Lasche den Einschnürungsabschnitt des Verbindungsabschnitts des Verbindungsbolzens immer stärker axial bezüglich der Bolzenachse (bzw. bezüglich der genannten, zur Anlagefläche des ersten Blechteils orthogonalen Einsteckrichtung) ausfüllen. Insbesondere kann dadurch der Verbindungsbolzen beim Versetzen vom Einsteckabschnitt entlang der Längsrichtung zum Verriegelungsabschnitt der Aufnahmeöffnung durch die Laschen an beiden Rändern der Aufnahmeöffnung kontinuierlich tiefer in die Aufnahmeöffnung gezogen werden, so dass die beiden Blechteile besonders eng und stramm miteinander verbunden werden.

Gemäß einer vorteilhaften Weiterbildung der vorstehenden Ausführungsform kann sich an den Rampenabschnitt in Richtung zum Verriegelungsabschnitt ein Plateauabschnitt anschließen, entlang dessen die Erstreckung der Lasche orthogonal zur Anlagefläche des ersten Blechteils konstant bleibt. Vorzugsweise erstreckt sich der Plateauabschnitt über zumindest ein Drittel, insbesondere nicht mehr als zwei Drittel, der Länge der Lasche entlang der Längsrichtung und/oder umfasst ein verriegelungsabschnittsseitiges Ende des Zwischenabschnitts. Durch einen solchen Plateauabschnitt wird vermieden, dass sich die Lasche im Wesentlichen lediglich punktuell an dem Schulterabschnitt des Verbindungsabschnitts des Verbindungsbolzens abstützt. Außerdem kann durch den Plateauabschnitt sichergestellt werden, dass beim Versetzen des in die Aufnahmeöffnung eingesteckten Verbindungsabschnitts des Verbindungsbolzens entlang der Längsrichtung der Verbindungsbolzen den Verriegelungsabschnitt der Aufnahmeöffnung tatsächlich erreicht. Das kann dazu beitragen, dass er dann auch bezüglich seiner Position entlang der Längsrichtung zuverlässig eindeutig festgelegt ist.

Gemäß einer weiteren vorteilhaften Ausführungsform weist die Lasche eine maximale Erstreckung orthogonal zur Anlagefläche des ersten Blechteils auf, die nach Art einer Übermaßpassung größer als die Erstreckung des Einschnürungsabschnitts des Verriegelungsbolzes entlang der Bolzenachse ist. Durch eine solche Ausbildung kann die jeweilige Lasche in bezüglich der Bolzenachse (bzw. bezüglich der genannten Einsteckrichtung) axialer Richtung zwischen dem Schulterabschnitt und einer dazu entgegengesetzten Begrenzung des Einschnürungsabschnitts des Verbindungsbolzens eingeklemmt werden, wobei diese entgegengesetzte Begrenzung insbesondere durch die Anlagefläche des zweiten Blechteils gebildet sein kann.

Die Lasche kann ihre maximale Erstreckung orthogonal zur Anlagefläche insbesondere im Bereich eines Übergangs vom Zwischenabschnitt zum Verriegelungsabschnitt aufweisen. Die Lasche kann sich auch bis in den Verriegelungsabschnitt hinein erstrecken, wobei die Erstreckung der Lasche orthogonal zur Anlagefläche dabei wieder abnehmen kann, um eine Art Einrasten des Verbindungsbolzens in dem Verriegelungsabschnitt zu bewirken. Wenn die Erstreckung nicht wieder abnimmt bleibt sie im Verriegelungsabschnitt vorzugsweise konstant.

Des Weiteren ist es bevorzugt, wenn die Aufnahmeöffnung bezüglich der Längsrichtung (genauer: bezüglich einer zur Längsrichtung parallelen und zur Anlagefläche des ersten Blechteils orthogonalen Spiegelebene) spiegelsymmetrisch ausgebildet ist.

Die Erfindung wird im Folgenden lediglich beispielhaft unter Bezugnahme auf die Figuren weiter erläutert.
- Fig. 1: zeigt eine Ausführungsform einer erfindungsgemäßen Blechverbindung aus einer zur Anlagefläche des ersten Blechteils parallelen Blickrichtung.
- Fig. 2: zeigt dieselbe Ausführungsform aus einer zur Anlagefläche des ersten Blechteils orthogonalen Blickrichtung.
- Fig. 3: zeigt dieselbe Ausführungsform in einer Schnittdarstellung in noch nicht vollständig verbundenem Zustand.
- Fig. 4: zeigt dieselbe Ausführungsform in einer Schnittdarstellung in verbundenem Zustand.
- Fig. 5: zeigt dieselbe Ausführungsform in dem in Fig. 3 gezeigten noch nicht vollständig verbundenen Zustand in einer perspektivischen Darstellung.
- Fig. 6: zeigt dieselbe Ausführungsform in dem in Fig. 4 gezeigten verbundenen Zustand in einer perspektivischen Darstellung.

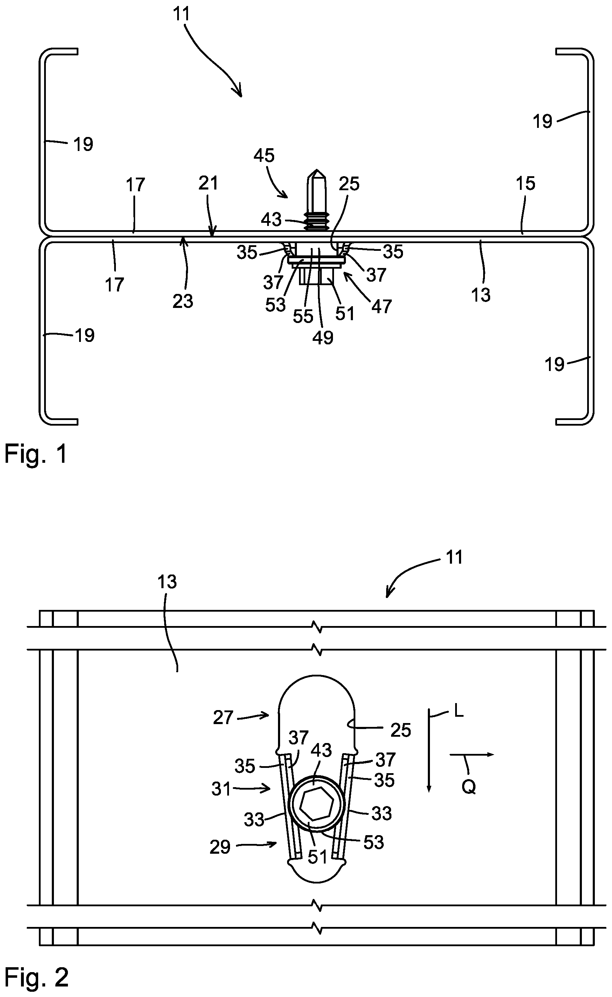

In den Figuren ist jeweils dieselbe Ausführungsform einer erfindungsgemäßen Blechverbindung 11 in unterschiedlichen Darstellungen, insbesondere aus unterschiedlichen Blickrichtungen, sowie in verschiedenen Zuständen dargestellt. Die Blechverbindung 11 umfasst dabei jeweils ein erstes Blechteil 13, welches mit einem zweiten Blechteil 15 verbunden wird. Das erste Blechteil 13 und das zweite Blechteil 15 sind dabei jeweils als längliche Profile ausgebildet, deren Querschnitt übereinstimmt und jeweils eine C-Form aufweist. Diese Form ist insbesondere in Fig. 1 zu erkennen, in der die Blechverbindung 11 aus einer Blickrichtung parallel zur Längserstreckung der Blechteile 13, 15 (und somit senkrecht zu deren Querschnitt) gezeigt ist.

Die C-Form des Querschnitts weist jeweils einen flächig ausgebildeten Mittelabschnitt 17 auf sowie zwei Randabschnitte 19 auf, die orthogonal zu dem Mittelabschnitt 17 ausgerichtet sind. Eine Oberfläche des Mittelabschnitts 17, die von einem von der C-Form weitgehend umschlossenen Innenbereich des Querschnitts weg weist, bildet eine ebene Anlagefläche 21 bzw. 23 des jeweiligen Blechteils 13 bzw. 15. Im verbundenen Zustand, der in den Fig. 1, 2, 4 und 6 gezeigt ist, liegt das erste Blechteil 13 mit seiner Anlagefläche 21 an der Anlagefläche 23 des zweiten Blechteils 15 an.

Das erste Blechteil 13 und das zweite Blechteil 15 sind jeweils als Abschlussprofil eines Wand- oder Deckenelements für den Trocken- oder Stahlleichtbau ausgebildet. Dazu sind die Randabschnitte 19 jeweils mit einem oder mehreren Wandfeldern (nicht dargestellt) beplankt. Über die erfindungsgemäße Blechverbindung 11 können zur Verbindung zweier Wand- oder Deckenelemente auf Stoß die beiden Blechteile 13, 15 an ihren Anlageflächen 21, 23 miteinander verbunden werden, ohne dass der genannte Innenbereich des jeweiligen Profils zugänglich sein müsste und somit ohne dass ein Teil der Beplankung offen bleiben oder geöffnet werden müsste.

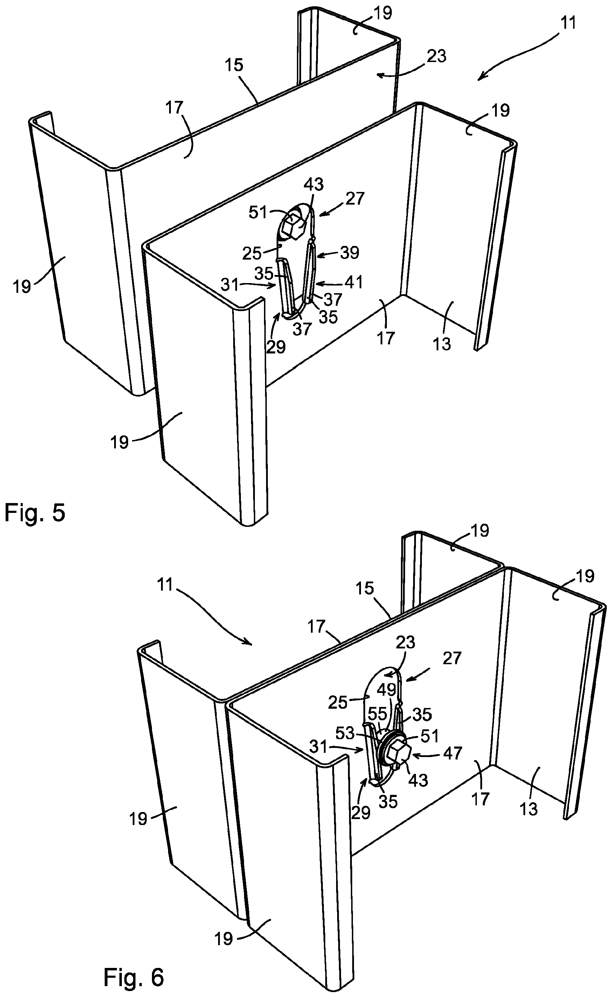

Wie insbesondere in der Fig. 2, in der die Blechverbindung 11 aus einer Blickrichtung senkrecht zu den Anlageflächen 21, 23 von der Seite des ersten Blechteils 13 aus gezeigt ist, sowie in der perspektivischen Darstellung der Fig. 5 und 6 zu erkennen ist, umfasst die Blechverbindung 11 eine in der Anlagefläche 21 des ersten Blechteils 13 ausgebildete Aufnahmeöffnung 25. Die Aufnahmeöffnung 25 weist eine längliche Form auf und erstreckt sich entlang einer zur Anlagefläche 21 parallelen Längsrichtung L von einem Einsteckabschnitt 27 zu einem Verriegelungsabschnitt 29, die insofern Endabschnitte der Längserstreckung der Aufnahmeöffnung 25 bilden. Die Längsrichtung L ist dabei parallel zur Längserstreckung des ersten Blechteils 13 ausgerichtet, orthogonal zu welcher das erste Blechteil 13 durchgehend den genannten C-förmigen Querschnitt aufweist. Bezüglich einer zur Längsrichtung L parallelen und zur Anlagefläche 21 des ersten Blechteils 13 senkrechten Spiegelebene ist die Aufnahmeöffnung 25 spiegelsymmetrisch ausgebildet.

Der Einsteckabschnitt 27 der Aufnahmeöffnung 25 weist eine Breite - d. h. eine Erstreckung entlang einer Querrichtung Q, die parallel zur Anlagefläche 21 des ersten Blechteils 13 und orthogonal zur Längsrichtung L ist - auf, die größer als die Breite des Verriegelungsabschnitts 29 der Aufnahmeöffnung 25 ist. Ein Zwischenabschnitt 31 der Aufnahmeöffnung 25, der sich im Wesentlichen vom Einsteckabschnitt 27 bis zum Verriegelungsabschnitt 29 erstreckt, wird bezüglich der Querrichtung Q durch zwei zueinander entgegengesetzte Ränder 33 begrenzt, die jeweils einen geraden Verlauf aufweisen und deren Abstand voneinander in Richtung zum Verriegelungsabschnitt abnimmt (vgl. insbesondere Fig. 2). Dadurch nimmt die Breite der Aufnahmeöffnung 25 entlang des Zwischenabschnitts 31 kontinuierlich ab.

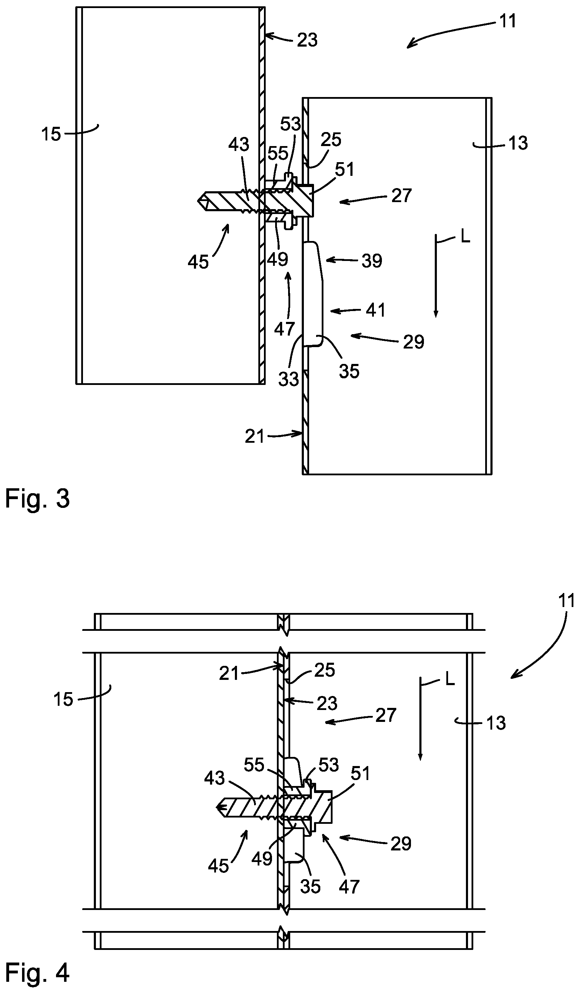

An jedem der beiden Ränder 33 ist jeweils eine Lasche 35 ausgebildet, die - mit dem jeweiligen Rand 33 als Biegekante - gegenüber der Anlagefläche 21 des ersten Blechteils 13 umgebogen ist und zwar in zu der Richtung, in welche die Anlagefläche 21 weist, entgegengesetzte Richtung. Dadurch stehen die Laschen 35 in den genannten Innenbereich von dem jeweiligen Rand 33 vor (vgl. beispielsweise Fig. 3 und 4; in Fig. 2 stehen die Laschen 35 in Richtung zum Betrachter vor). Wie insbesondere in Fig. 1 zu erkennen ist, sind die Laschen 35 dabei nicht in einem Winkel von 90° zur Anlagefläche 21 ausgerichtet, sondern sind gegenüber einer mit der Anlagefläche 21 des ersten Blechteils 13 planen Ausrichtung um einen Winkel von etwa 70° umgebogen. Dadurch, dass der Winkel größer als 45° ist, weist allerdings eine dem jeweiligen Rand 33 entgegengesetzte Stirnseite 37 der jeweiligen Lasche 35 stärker in eine zu der Anlagefläche 21 senkrechte Richtung als in eine zu der Anlagefläche 21 parallele Richtung.

Wie insbesondere in den Querschnittsdarstellungen der Fig. 3 und 4 zu erkennen ist, weisen die Laschen 35 in zu der Anlagefläche 21 des ersten Blechteils 13 orthogonaler Richtung keine konstante Erstreckung auf. Vielmehr nimmt diese Erstreckung ausgehend von einem einsteckabschnittsseitigen Ende des Zwischenabschnitts 31 entlang eines Rampenabschnitts 39 mit zunehmendem Abstand vom Einsteckabschnitt 27 zunächst zu, bevor sie entlang eines Plateauabschnitts 41, der sich in Richtung zum Verriegelungsabschnitt 29 an den Rampenabschnitt 39 anschließt und sich bis zu dem verriegelungsabschnittseitigen Ende des Zwischenabschnitts 31 erstreckt, konstant bleibt (vgl. insbesondere Fig. 3 und 5).

Die Blechverbindung 11 umfasst ferner einen Verbindungsbolzen 43, der sich entlang einer Bolzenachse erstreckt und dazu ausgebildet ist, mit einem Befestigungsabschnitt 45 an der Anlagefläche 23 des zweiten Blechteils 15 derart angebracht zu werden, dass er mit einem Verbindungsabschnitt 47 orthogonal von der Anlagefläche 23 vorsteht (vgl. insbesondere die Querschnittsdarstellungen der Fig. 3 und 4). In dem gezeigten Beispiel ist der Verbindungsbolzen 43 nach Art einer Schraube ausgebildet und weist eine zumindest im Wesentlichen hohlzylindrisch ausgebildete Hülse 49 auf, durch die sich der Verbindungsbolzen 43 mit seinem Befestigungsabschnitt 45 hindurch erstreckt. Der Befestigungsabschnitt 45 weist ein Gewinde auf und ist selbstbohrend ausgebildet, so dass der Verbindungsbolzen 43 in die Anlagefläche 23 des zweiten Blechteils 15 einfach eingeschraubt werden kann. Dadurch wird die Hülse 49 bezüglich der Bolzenachse axial zwischen einem Kopfabschnitt 51 des Verbindungsbolzens 43 und der Anlagefläche 23 des zweiten Blechteils 15 gefangen. Die Hülse 49 bildet dann (gegebenenfalls gemeinsam mit dem Kopfabschnitt 51) den Verbindungsabschnitt 47, mit dem der Verbindungsbolzen 43 von der Anlagefläche 23 vorsteht.

Die Hülse 49 weist an dem zum Kopfabschnitt 51 weisenden Ende ihrer axialen Erstreckung eine Durchmessererweiterung nach Art eines Flansches auf, die einen Schulterabschnitt 53 des Verbindungsabschnitts 47 des Verbindungsbolzens 43 bildet. Der übrige Teil der Hülse 49 weist einen demgegenüber geringeren Durchmesser auf und bildet einen Einschnürungsabschnitt 55 des Verbindungsabschnitts 47 des Verbindungsbolzens 43.

Grundsätzlich könnte der Verbindungsbolzen 43 allerdings auch ohne Hülse 49 ausgebildet sein. In diesem Fall könnte der Schulterabschnitt 53 dann durch den Kopfabschnitt 51 oder durch einen Teil des Kopfabschnitts 51 gebildet werden, während der Einschnürungsabschnitt 55 durch einen zwischen dem Befestigungsabschnitt 47 und dem Kopfabschnitt 51 angeordneten und an den Kopfabschnitt 51 angrenzenden Abschnitt des Verbindungsbolzens 43 gebildet wird, der einen im Vergleich zu dem Kopfabschnitt 51 geringeren Durchmesser aufweist.

Der Durchmesser des Schulterabschnitts 53 ist zwar kleiner als die Breite des Einsteckabschnitts 27 der Aufnahmeöffnung 25, jedoch größer als die Breite des Verriegelungsabschnitts 29 der Aufnahmeöffnung 25, während der Durchmesser des Einschnürungsabschnitts 55 zumindest im Wesentlichen der Breite des Verriegelungsabschnitts 29 entspricht. Dadurch kann der Verbindungsbolzen 43 mit seinem Verbindungsabschnitt 47 entlang einer zur Bolzenachse parallelen Einsteckrichtung im Bereich des Einsteckabschnitts 27 in die Aufnahmeöffnung 25 eingesteckt werden (vgl. Fig. 3 und 5) und anschließend entlang der Längsrichtung L bis in den Bereich des Verriegelungsabschnitts 29 versetzt werden (vgl. Fig. 4 und 6). In der dann eingenommenen Stellung kann der Verriegelungsbolzen 43 jedoch nicht in zu der Einsteckrichtung entgegengesetzter Richtung aus der Aufnahmeöffnung 25 wieder entnommen werden, da der Schulterabschnitt 53 die Aufnahmeöffnung 25 im Bereich ihres Verriegelungsabschnitts 29 hintergreift. Auf diese Weise ist das zweite Blechteil 15 dann formschlüssig mit dem ersten Blechteil 13 verbunden.

Die Breite des Verriegelungsabschnitts 29 der Aufnahmeöffnung 25 ist dabei nach Art einer Übermaßpassung geringfügig kleiner als der Durchmesser des Einschnürungsabschnitts 55 des Verbindungsabschnitts 47 des Verbindungsbolzens 43. Dadurch wird der Verbindungsbolzen 43 beim Versetzen vom Einsteckabschnitt 27 in den Verriegelungsabschnitt 29 der Aufnahmeöffnung 25 mit seinem Einschnürungsabschnitt 55 schließlich beidseitig eingeklemmt. Auf diese Weise erfolgt eine präzise Festlegung der Position des zweiten Blechteils 15 relativ zu dem ersten Blechteil 13 bezüglich der Querrichtung Q. Zudem wird der Verbindungsbolzen 43 dadurch kraftschlüssig gegen ein entgegengesetztes Versetzen in Richtung zum Einsteckabschnitt 27, an dem er die Aufnahmeöffnung 25 wieder verlassen könnte, gesichert.

Beim Versetzen des Verbindungsbolzens 43 in Richtung zum Verriegelungsabschnitt 29 greifen zudem die an den Rändern 33 des Zwischenabschnitts 31 der Aufnahmeöffnung 25 ausgebildeten Laschen 35 in den Einschnürungsabschnitt 55 des Verbindungsbolzens 43 ein. Aufgrund der zunehmenden Erstreckung der Laschen 35 orthogonal zur Anlagefläche 21 des ersten Blechteils 13 wird der Verriegelungsbolzen 43 dabei in die Aufnahmeöffnung 25 hineingezogen, bis er den Plateauabschnitt 41 erreicht hat (vgl. insbesondere Fig. 3 und 4). Auf diese Weise werden die Anlageflächen 21, 23 der beiden Blechteile 13, 15 beim Verbinden gegeneinander gezogen, so dass die beiden Blechteile 13, 15 auch bezüglich einer zu den Anlageflächen 21, 23 orthogonalen Richtung präzise positioniert werden.

Dazu kann ferner beitragen, dass auch die genannte Erstreckung der Laschen 35 orthogonal zur Anlagefläche 21 des ersten Blechteils 13 nach Art einer Übermaßpassung geringfügig größer als die axiale Erstreckung des Einschnürungsabschnitts 55 ist. Denn auf diese Weise werden die Laschen 35 zwischen dem Schulterabschnitt 53 und der Anlagefläche 23 des zweiten Blechteils 15 eingeklemmt, was außerdem noch zusätzlich zu der genannten kraftschlüssigen Sicherung des Verbindungsbolzens 43 in dem Verriegelungsabschnitt 29 beiträgt. Aufgrund der beschriebenen Ausrichtung der Laschen 35 werden die Stirnseiten 37 der Laschen 35 dabei nicht radial gegen den Einschnürungsabschnitt 55, sondern axial gegen den Schulterabschnitt 53 gedrängt. Dadurch werden die Laschen 35 besonders zuverlässig eingeklemmt bzw. wird weitgehend ausgeschlossen, dass die Laschen 35 dem Verbindungsbolzen 43 durch Verformung ausweichen können.

Des Weiteren kann das zweite Blechteil 15 beim Verbinden auch bezüglich seiner Position entlang der Längsrichtung L relativ zu dem ersten Blechteil 13 festgelegt sein, da der an dem zweiten Blechteil 15 angebrachte Verbindungsbolzen 43 innerhalb der Aufnahmeöffnung 25 grundsätzlich nur bis ans Ende des Verriegelungsabschnitts 29 versetzt werden kann, jedoch nicht darüber hinaus. Eine Festlegung entlang der Längsrichtung L kann jedoch gerade beim Verbinden zweier Wandelemente, für die die Längsrichtung L vertikal ausgerichtet ist, vergleichsweise weniger wichtig sein, da die Wandelemente in vertikaler Richtung bereits durch ihr Aufstehen auf einem Boden festgelegt sein können.

Insgesamt kann durch die erfindungsgemäße Ausbildung der Blechverbindung 11 eine zuverlässige Verbindung zweier Blechteile 13, 15 erreicht werden, für die keine Zugänglichkeit zu einem Innenbereich des jeweiligen Blechteils 13 bzw. 15 erforderlich ist und die sich daher insbesondere für das Verbinden von Profilen von Wand- oder Deckenelementen im Trocken- oder Stahlleichtbau eignet. Darüber hinaus kann die erfindungsgemäße Blechverbindung 11 zu einer präzisen Positionierung der beiden Blechteile 13, 15 relativ zueinander ohne weitere Hilfsmittel beitragen, so dass sich vorteilhafterweise der Arbeitsaufwand reduziert.

### Bezugszeichen

- 11: Blechverbindung
- 13: erstes Blechteil
- 15: zweites Blechteil
- 17: Mittelabschnitt
- 19: Randabschnitt
- 21: Anlagefläche des ersten Blechteils
- 23: Anlagefläche des zweiten Blechteils
- 25: Aufnahmeöffnung
- 27: Einsteckabschnitt
- 29: Verriegelungsabschnitt
- 31: Zwischenabschnitt
- 33: Rand
- 35: Lasche
- 37: Stirnseite
- 39: Rampenabschnitt
- 41: Plateauabschnitt
- 43: Verbindungsbolzen
- 45: Befestigungsabschnitt
- 47: Verbindungsabschnitt
- 49: Hülse
- 51: Kopfabschnitt
- 53: Schulterabschnitt
- 55: Einschnürungsabschnitt
- L: Längsrichtung
- Q: Querrichtung

## Patentansprüche

1. Blechverbindung (11) umfassend eine Aufnahmeöffnung (25), die in einer ebenen Anlagefläche (21) eines ersten Blechteils (13) ausgebildet ist, und einen Verbindungsbolzen (43), der sich entlang einer Bolzenachse erstreckt und dazu ausgebildet ist, mit einem Befestigungsabschnitt (45) an einer ebenen Anlagefläche (23) eines zweiten Blechteils (15) derart angebracht zu werden, dass der Verbindungsbolzen (43) mit einem Verbindungsabschnitt (47) orthogonal von der Anlagefläche (23) des zweiten Blechteils (15) vorsteht,
wobei der Verbindungsabschnitt (47) einen Einschnürungsabschnitt (55) umfasst und einen Schulterabschnitt (53) umfasst, der entlang der Bolzenachse in von dem Befestigungsabschnitt (43) weg weisender Richtung an den Einschnürungsabschnitt (55) angrenzt und einen größeren Durchmesser als der Einschnürungsabschnitt (55) aufweist,
wobei sich die Aufnahmeöffnung (25) entlang einer zur Anlagefläche (21) des ersten Blechteils (13) parallelen Längsrichtung (L) von einem Einsteckabschnitt (27) zu einem Verriegelungsabschnitt (29) erstreckt,
wobei der Einsteckabschnitt (27) quer zur Längsrichtung (L) eine Breite aufweist, die größer als der Durchmesser des genannten Schulterabschnitts (53) ist, und der Verriegelungsabschnitt (29) quer zur Längsrichtung (L) eine Breite aufweist, die kleiner als der Durchmesser des genannten Schulterabschnitts (53) ist und vorzugsweise zumindest im Wesentlichen dem Durchmesser des genannten Einschnürungsabschnitts (55) entspricht, wobei die Aufnahmeöffnung (25) zwischen dem Einsteckabschnitt (27) und dem Verriegelungsabschnitt (29) einen Zwischenabschnitt (31) aufweist, der quer zur Längsrichtung (L) durch zwei zueinander entgegengesetzte Ränder (33) begrenzt wird, die jeweils einen geraden Verlauf aufweisen und deren Abstand voneinander in Richtung zum Verriegelungsabschnitt (29) abnimmt,
**dadurch gekennzeichnet,**
**dass** an jedem der zwei genannten Ränder (33) jeweils eine Lasche (35) ausgebildet ist, die entlang des jeweiligen Randes (33) gegenüber der Anlagefläche (21) des ersten Blechteils (13) umgebogen ist, so dass sie entgegen der Richtung, in welche die Anlagefläche (21) des ersten Blechteils (13) weist, von dem jeweiligen Rand (33) vorsteht.

2. Blechverbindung nach Anspruch 1,
wobei die Breite des Verriegelungsabschnitts (29) der Aufnahmeöffnung (25) nach Art einer Übermaßpassung kleiner als der Durchmesser des genannten Einschnürungsabschnitts (55) des Verbindungsbolzens (43) ist.

3. Blechverbindung nach Anspruch 1 oder 2,
wobei die Lasche (35) entlang des jeweiligen Randes (33) aus einer mit der Anlagefläche (21) des ersten Blechteils (13) planen Ausrichtung um einen Winkel umgebogen ist, der größer als 45° ist, vorzugsweise zwischen 60° und 80°, weiter bevorzugt zwischen 65° und 75°, insbesondere zumindest im Wesentlichen 70°, beträgt.

4. Blechverbindung nach einem der vorstehenden Ansprüche,
wobei die Lasche (35) eine Erstreckung orthogonal zur Anlagefläche (21) des ersten Blechteils (13) aufweist, die zumindest entlang eines Rampenabschnitts (39) des Zwischenabschnitts (31) mit zunehmendem Abstand vom Einsteckabschnitt (27) zunimmt.

5. Blechverbindung nach Anspruch 4,
wobei sich an den Rampenabschnitt (39) in Richtung zum Verriegelungsabschnitt (29) ein Plateauabschnitt (41) anschließt, entlang dessen die Erstreckung der Lasche orthogonal zur Anlagefläche (21) des ersten Blechteils (13) konstant bleibt.

6. Blechverbindung nach einem der vorstehenden Ansprüche,
wobei die Lasche (35) eine maximale Erstreckung orthogonal zur Anlagefläche (21) des ersten Blechteils (13) aufweist, die nach Art einer Übermaßpassung größer als die Erstreckung des Einschnürungsabschnitts (55) des Verriegelungsbolzes (43) entlang der Bolzenachse ist.

7. Blechverbindung nach einem der vorstehenden Ansprüche,
wobei die Aufnahmeöffnung (25) bezüglich der Längsrichtung (L) spiegelsymmetrisch ausgebildet ist.

8. Blechverbindung nach einem der vorstehenden Ansprüche,
wobei das erste Blechteil (13) als Abschlussprofil eines Wand- oder Deckenelements für den Trocken- oder Stahlleichtbau ausgebildet ist, wobei das Abschlussprofil eine C-Form oder U-Form mit einem Mittelabschnitt (17) und zwei Randabschnitten (19) aufweist, die orthogonal zu dem Mittelabschnitt (19) ausgerichtet sind,
wobei die Randabschnitte (17) jeweils mit einem Wandfeld beplankt sind, und
wobei der Mittelabschnitt (19) die Anlagefläche (21) mit der Aufnahmeöffnung (25) aufweist.

## Claims

1. A sheet metal connection (11) comprising a receiving opening (25), which is formed in a planar contact surface (21) of a first sheet metal part (13), and a connection bolt (43) which extends along a bolt axis and which is configured to be attached with a fastening section (45) to a planar contact surface (23) of a second sheet metal part (15) such that the connection bolt (43) projects with a connection section (47) orthogonally from the contact surface (23) of the second sheet metal part (15),
wherein the connection section (47) comprises a constriction section (55) and a shoulder section (53) which adjoins the constriction section (55) along the bolt axis in a direction facing away from the fastening section (43) and which has a larger diameter than the constriction section (55),
wherein the receiving opening (25) extends along a longitudinal direction (L), which is parallel to the contact surface (21) of the first sheet metal part (13), from an insertion section (27) to a locking section (29),
wherein the insertion section (27) has a width transverse to the longitudinal direction (L) that is greater than the diameter of said shoulder section (53) and the locking section (29) has a width transverse to the longitudinal direction (L) that is smaller than the diameter of said shoulder section (53) and preferably at least substantially corresponds to the diameter of said constriction section (55),
wherein the receiving opening (25) between the insertion section (27) and the locking section (29) has an intermediate section (31) which is bounded transversely to the longitudinal direction (L) by two mutually opposite edges (33) which each have a straight course and whose distance from one another decreases in the direction of the locking section (29),
**characterized in that**
a respective tab (35) is formed at each of the two mentioned edges (33) and is bent over along the respective edge (33) with respect to the contact surface (21) of the first sheet metal part (13) so that said tab (35) projects from the respective edge (33) opposite to the direction in which the contact surface (21) of the first sheet metal part (13) faces.

2. A sheet metal connection according to claim 1,
wherein the width of the locking section (29) of the receiving opening (25) is smaller than the diameter of said constriction section (55) of the connection bolt (43) in the manner of an oversize fit.

3. A sheet metal connection according to claim 1 or 2,
wherein the tab (35) is bent over along the respective edge (33) from an alignment planar with the contact surface (21) of the first sheet metal part (13) by an angle which is greater than 45°, preferably amounts to between 60° and 80°, further preferably to between 65° and 75°, in particular to at least substantially 70°.

4. A sheet metal connection according to any one of the preceding claims, wherein the tab (35) has an extent orthogonal to the contact surface (21) of the first sheet metal part (13), said extent increasing at least along a ramp section (39) of the intermediate section (31) as the distance from the insertion section (27) increases.

5. A sheet metal connection according to claim 4,
wherein a plateau section (41), along which the extent of the tab remains constant orthogonal to the contact surface (21) of the first sheet metal part (13), adjoins the ramp section (39) in the direction of the locking section (29).

6. A sheet metal connection according to any one of the preceding claims,
wherein the tab (35) has a maximum extent orthogonal to the contact surface (21) of the first sheet metal part (13), said extent being greater than the extent of the constriction section (55) of the locking bolt (43) along the bolt axis in the manner of an oversize fit.

7. A sheet metal connection according to any one of the preceding claims, wherein the receiving opening (25) is mirror-symmetrical with respect to the longitudinal direction (L).

8. A sheet metal connection according to any one of the preceding claims, wherein the first sheet metal part (13) is configured as an end profile of a wall element or ceiling element for drywall construction or lightweight steel construction,
wherein the end profile has a C shape or a U shape having a central section (17) and two edge sections (19) which are oriented orthogonally to the central section (19),
wherein the edge sections (17) are each planked with a wall field, and wherein the central section (19) has the contact surface (21) having the receiving opening (25).

## Revendications

1. Assemblage de tôles (11) comprenant une ouverture de réception (25), ménagée dans une surface d'appui plane (21) d'une première pièce en tôle (13), et un boulon d'assemblage (43) s'étendant le long d'un axe de boulon et conçu pour être fixé, par une portion de fixation (45), à une surface d'appui plane (23) d'une deuxième pièce en tôle (15) de telle sorte que le boulon d'assemblage (43) dépasse, par une portion d'assemblage (47), orthogonalement de la surface d'appui (23) de la deuxième pièce en tôle (15), dans lequel
la portion d'assemblage (47) comprend une portion de rétrécissement (55) et comprend une portion d'épaulement (53) qui est adjacente à la portion de rétrécissement (55) le long de l'axe du boulon dans une direction s'éloignant de la portion de fixation (43) et qui présente un diamètre supérieur à celui de la portion de rétrécissement (55),
l'ouverture de réception (25) s'étend à partir d'une portion d'insertion (27) jusqu'à une portion de verrouillage (29) le long d'une direction longitudinale (L) parallèle à la surface d'appui (21) de la première pièce en tôle (13),
la portion d'insertion (27) présente, transversalement à la direction longitudinale (L), une largeur supérieure au diamètre de ladite portion d'épaulement (53), et la portion de verrouillage (29) présente, transversalement à la direction longitudinale (L), une largeur qui est inférieure au diamètre de ladite portion d'épaulement (53) et correspond de préférence au moins sensiblement au diamètre de ladite portion de rétrécissement (55),
l'ouverture de réception (25) présente, entre la portion d'insertion (27) et la portion de verrouillage (29), une portion intermédiaire (31) qui est délimitée transversalement à la direction longitudinale (L) par deux bords (33) opposés l'un à l'autre, qui présentent chacun un tracé rectiligne et dont la distance l'un de l'autre diminue en direction vers la portion de verrouillage (29),
**caractérisé en ce que**
une languette respective (35) est formée sur chacun desdits deux bords (33), laquelle est repliée par rapport à la surface d'appui (21) de la première pièce en tôle (13) le long du bord respectif (33), de sorte qu'elle dépasse du bord respectif (33) dans la direction opposée à celle dans laquelle est dirigée la surface d'appui (21) de la première pièce en tôle (13).

2. Assemblage de tôles selon la revendication 1,
dans lequel la largeur de la portion de verrouillage (29) de l'ouverture de réception (25) est inférieure au diamètre de ladite partie de rétrécissement (55) du boulon d'assemblage (43), à la manière d'un ajustement avec surépaisseur.

3. Assemblage de tôles selon la revendication 1 ou 2,
dans lequel la languette (35) est repliée le long du bord respectif (33) à partir d'un alignement plan avec la surface d'appui (21) de la première pièce en tôle (13) selon un angle supérieur à 45°, de préférence compris entre 60° et 80°, de préférence entre 65° et 75°, en particulier au moins sensiblement égal à 70°.

4. Assemblage de tôles selon l'une des revendications précédentes, dans lequel la languette (35) présente une extension orthogonale à la surface d'appui (21) de la première pièce en tôle (13), qui augmente au moins le long d'une partie en rampe (39) de la portion intermédiaire (31) à mesure que la distance par rapport à la portion d'insertion (27) augmente.

5. Assemblage de tôles selon la revendication 4,
dans lequel la partie en rampe (39) est suivie, en direction vers la portion de verrouillage (29), d'une partie plate (41) le long de laquelle l'extension de la languette orthogonalement à la surface d'appui (21) de la première pièce en tôle (13) reste constante.

6. Assemblage de tôles selon l'une des revendications précédentes,
dans lequel la languette (35) présente une extension maximale orthogonalement à la surface d'appui (21) de la première pièce en tôle (13) qui est supérieure à l'extension de la partie de rétrécissement (55) du boulon de verrouillage (43) le long de l'axe du boulon, à la manière d'un ajustement avec surépaisseur.

7. Assemblage de tôles selon l'une des revendications précédentes,
dans lequel l'ouverture de réception (25) est à symétrie axiale par rapport à la direction longitudinale (L).

8. Assemblage de tôles selon l'une des revendications précédentes,
dans lequel la première pièce en tôle (13) est conçue comme un profilé de finition d'un élément de paroi ou de plafond pour la construction à sec ou la construction légère en acier,
le profilé de finition présente une forme en C ou en U avec une portion centrale (17) et deux portions de bord (19) qui sont orientées orthogonalement par rapport à la portion centrale (19),
les portions de bord (17) sont chacune recouvertes d'un panneau mural, et la portion centrale (19) présente la surface d'appui (21) munie de l'ouverture de réception (25).
